# EUROPEAN PATENT APPLICATION

(11) **EP 2 031 585 A1**
(43) Date of publication of application: **04.03.2009**
(21) Application number: 08163589.8
(22) Date of filing: 03.09.2008
(51) Int. Cl.: G11B 5/48

(54) **Arm plate, head stack assembly comprising the same, and hard disk drive comprising the head stack assembly**

(30) Priority: 03.09.2007 KR 20070089148
(71) Applicant: Samsung Electronics Co., Ltd., Suwon-si, Gyeonggi-Do (KR)
(72) Inventor: Heo, Baek-ho, Gyeonggi-do (KR); Kim, Kwang-kyu, Gyeonggi-do (KR)
(74) Representative: Grünecker, Kinkeldey, Stockmair & Schwanhäusser Anwaltssozietät

(57) **Abstract**

An arm plate coupled to a pivot bearing to closely contact an overmold and having a leading end portion where a head gimbal assembly (HGA) is attached when assembling a head stack assembly (HSA) of a hard disk drive (HDD), wherein a bending alleviation through hole is formed in a portion that overlaps and closely contacts an edge of the overmold, the head stack assembly with the arm plate, and the hard disk drive with the head stack assembly.

## Description

### BACKGROUND OF THE INVENTION

### 1. Field of the Invention

The present general inventive concept relates to a hard disk drive (HDD), and more particularly, to an arm plate used for an unamount type head stack assembly (HSA), an HSA comprising the arm plate, and an HDD comprising the HAS.

### 2. Description of the Related Art

HDDs are an example of auxiliary memory devices used for computers, MP3 players, portable multimedia players (PMPs), and mobile phones. An HDD is a device to read and reproduce data stored on a disk that is a data storage medium or to write data to the disk using a head slider to record/reproduce the data. During the operation of an HDD, the head slider maintains a floating state in which the head slider is disposed at a predetermined height away from the disk. A magnetic head mounted on the head slider reads the data stored on the disk or writes data to the disk. A mechanism to support the head slider and to move the head slider to a predetermined position on the disk is referred to as a head stack assembly (HSA). The HSA is attached to a leading end of the head slider.

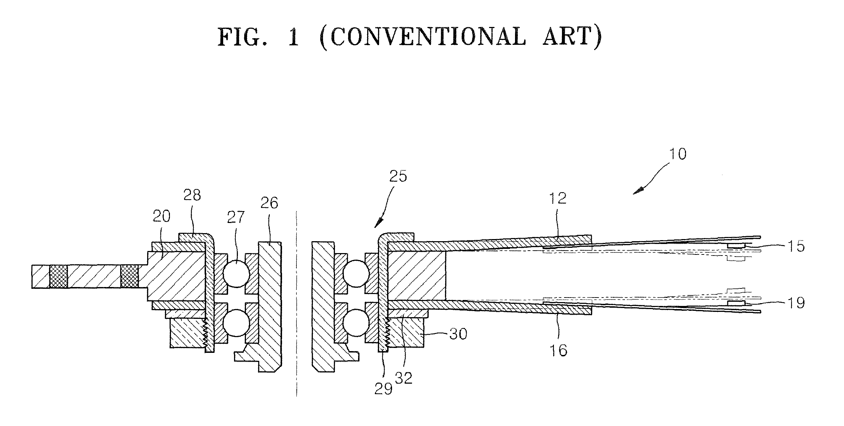

FIG. 1 is a cross-sectional view of a conventional HSA 10. Referring to FIG. 1, the HSA 10 is of an unamount type which includes the first and second arms 12 and 16, an overmold 20 interposed between the first and second arms 12 and 16, and a pivot bearing 25 connecting the first and second arms 12 and 16 and the overmold 20. Head sliders 15 and 19 to record/reproduce data are respectively mounted on leading end portions of the first and second arms 12 and 16.

The pivot bearing 25 includes an inner pipe 26, an outer pipe 28 located outside the inner pipe 26, and a bearing member 27 interposed between the inner and outer pipes 26 and 28. The lower end portion of the pivot bearing 25 protrudes downward below the second arm 16. A screw surface is formed in a lower end portion 29 of the outer pipe 28. The lower end portion 29 of the outer pipe 28 is fastened with a nut 30 to fix the first and second arms 12 and 16 and the overmold 20 such as not to be separated from the pivot bearing 25. Before the nut 30 is coupled to the lower end portion 29, a washer 32 is interposed between the second arm 16 and the nut 30 to firmly fix the coupling of the nut 30.

However, in the conventional HSA 10, as the overmold 20 closely contacts the first and second arms 12 and 16 by means of the coupling of the nut 30, as indicated by a solid line in FIG. 1, the first arm 12 and the second arm 16 are respectively bent upwards and downwards so that these arms 12 and 16 are not parallel as they extend outward, but rather extend away from each other. Stated differently, these arms 12 and 16 are not flat along their lengths. As a result, a bit error rate (BER) of the HSA increases and head-disk interference (HDI) increases, thereby decreasing reading and writing quality, including causing an increase in the number of defects during reading and writing operations. To overcome this problem, the first and second arms 12 and 16 extending away from each other due to the coupling of the nut 30 are bent back toward each other during manufacturing in order to make them parallel with each other. However, in this case, since an additional process is required, manufacturing costs increase.

### SUMMARY OF THE INVENTION

The present general inventive concept provides an arm PLATE which can alleviate bending of arms due to coupling of a nut during an assembly of a head stack assembly (HSA), the HSA including the arm plate, and a hard disk drive (HDD) including the HAS.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept can be achieve by providing an arm plate with the features of claim 1 and by a HSA comprising the arm plate, and a HDD comprising the HSA.

The bending alleviation through hole is a slot extending along the edge of the overmold.

The arm plate is provided in a pair and one of the arm plates closely contacts an upper end portion of the overmold and the other one closely contacts a lower end portion of the overmold.

The foregoing and/or other aspects and utilities of the present general inventive concept can also be achieve by providing a hard disk drive (HDD), including at least two arms each including a head slider to read and write data from and to a disk and a bending alleviation unit disposed at a portion thereof; an overmold disposed between each of the at least two arms, each overmold having an edge portion to extend along a length of each bending alleviation unit; and a pivot bearing assembly disposed through each of the at least two arms and the overmold to maintain each overmold between the respective at least two arms such that when the pivot bearing assembly assembles the overmold with the respective at least two arms, the bending alleviation unit prevents the edge of the overmold from bending the respective arm such that the at least two arms remain in parallel with each other.

Each of the at least two arms may include an arm plate having the pivot bearing assembly disposed through a first end thereof and the bending alleviation unit, and a head gimbal assembly (HGA) including a suspension attached at a first end to a second end of each arm plate and a head slider mounted on a second end portion of the suspension.

### BRIEF DESCRIPTION OF THE DRAWINGS

The above and other features and advantages of the present general inventive concept will become more apparent by describing in detail exemplary embodiments thereof with reference to the attached drawings in which:

FIG. 1 is a cross-sectional view of a conventional head stack assembly (HSA);

FIG. 2 is a plan view of a hard disk drive (HDD) according to an embodiment of the present general inventive concept;

FIG. 3 is an exploded perspective view of a HSA of the HDD of FIG. 2, according to an embodiment of the present general inventive concept; and

FIG. 4 is a cross-sectional view of the HSA of FIG. 3, according to an embodiment of the present general inventive concept.

### DETAILED DESCRIPTION OF THE PREFERRED EMBODIMENTS

Hereinafter, referring to the attached drawings, an arm plate according to an embodiment of the present general inventive concept, a head stack assembly (HSA) including the arm plate, and a hard disk drive (HDD) including the HSA will now be described in detail. Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

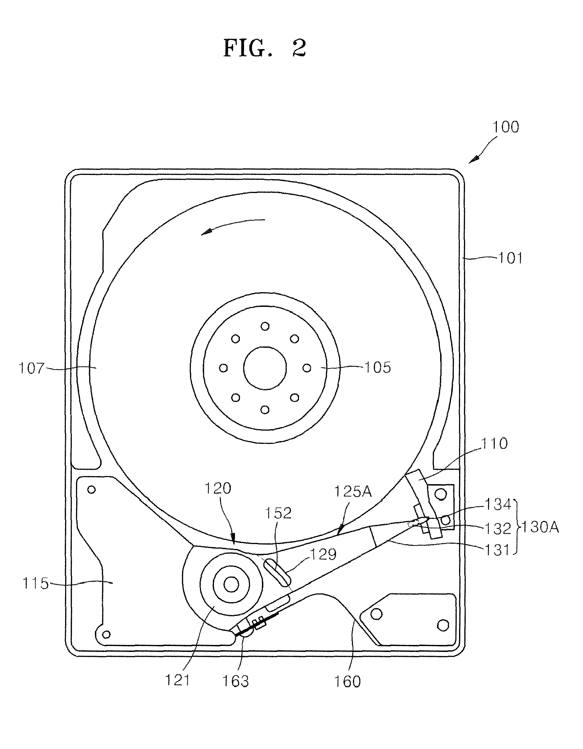

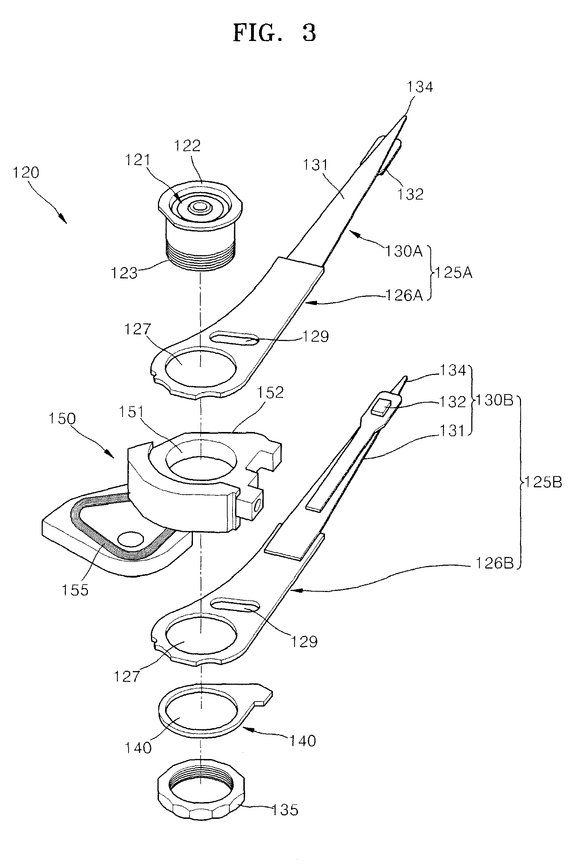

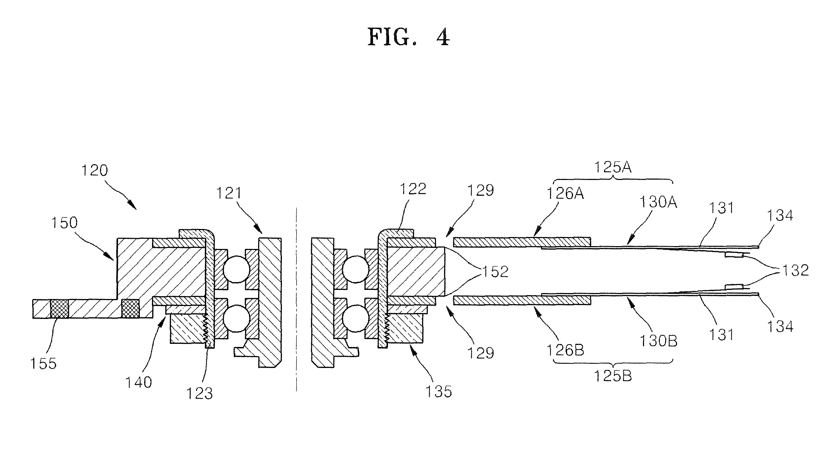

FIG. 2 is a plan view of an HDD 100 according to an embodiment of the present general inventive concept. FIG. 3 is an exploded perspective view of a HSA 120 of the HDD 100 of FIG. 2, according to an embodiment of the present general inventive concept. FIG. 4 is a cross-sectional view of the HSA 120 of FIG. 3, according to an embodiment of the present general inventive concept.

Referring to FIGS. 2-4, the HDD 100 includes a spindle motor 105, a disk 107 that is a data storage medium, an HSA 120, a main circuit substrate (not shown) to control the operation of the HSA 120, a flexible printed circuit (FPC) 160 electrically connecting the HSA 120 with the main circuit substrate, and a voice coil motor (VCM) block 115, in a housing including a base member 101 and a cover member (not shown) coupled to the base member 101.

The spindle motor 105 that rotates the disk 107 at high speed is fixedly installed on the base member 101. The disk 107 is coupled to the spindle motor 105 and rotates at a high speed in a direction indicated by an arrow illustrated in FIG. 2. Such high speed rotation induces air flow on a surface of the disk 107 in the same direction as the direction in which the disk 107 rotates.

The HSA 120 includes two head sliders 132 on which a magnetic head (not shown) for writing or reading data is formed on each of the head sliders 132. The head sliders 132 write data to the disk 107 or read data from the disk 107 by moving to a particular position of the disk 107, in detail, to a particular track of the disk. The HSA 120 pivots around a pivot bearing 121.

The HSA 120 is of an unamount type in which an overmold 150 is interposed between first and second arms 125A and 125B. The unamount type HSA 120 is mainly employed in a compact HDD comprising the disk 107 having a diameter smaller than 2.5 inches.

The HSA 120 includes the first and second arms 125A and 125B, each having a respective one of the head sliders 132 mounted on a leading end portion thereof, the overmold 150 interposed between the first and second arms 125A and 125B, and the pivot bearing 121 connecting the first and second arms 125A and 125B with the overmold 150. Also, the HSA 120 includes a nut 135 coupled to a lower end portion 123 of the pivot bearing 121 to prevent the first and second arms 125A and 125B and the overmold 150 from being separated from the pivot bearing 121, and a washer 140 coupled to the lower end portion 123 of the pivot bearing 121 prior to the coupling of the nut 135 so that the first and second arms 125A and 125B closely contact the overmold 150. Accordingly, the first and second arms 125A and 125B closely contact the upper and the lower end portions of the overmold 150, respectively, with the aid of a flange 122 provided in the upper end portion of the pivot bearing 121 and the nut 135 and the washer 140 coupled to the lower end portion 123 of the pivot bearing 121.

The first and second arms 125A and 125B include first and second arm plates 126A and 126B and head gimbal assemblies (HGAs) 130A and 130B respectively attached to the leading end portions of the first and second arm plates 126A and 126B. Each of the first and second arm plates 126A and 126B includes a coupling through hole 127 through which the pivot bearing 121 penetrates through and a bending alleviation through hole 129 that alleviates bending of the arm plates 126A and 126B during the coupling of the nut 135. Each of the HGAs 130A and 130B includes the head sliders 132 and a suspension 131 to support and elastically bias the head sliders 132 toward the surface of the disk 107 while being attached to each of the first and second arm plates 126A and 126B.

The overmold 150 includes a voice coil 155 which constitutes a voice coil motor and a coupling through hole 151 through which the pivot bearing 121 penetrates. The overmold 150 is coupled to the FPC 160 using a coupling screw 163 (see FIG. 2).

A lift force is applied to the head sliders 132 as air flow induced by the fast rotation of the disk 107 passes between the surface of the disk 107 and the surface of the head sliders 132 facing the disk 107. The head sliders 132 maintain a floating state at a height at which the lift force and an elastic pressing force of the suspension 131 pressing the head sliders 132 toward the disk 107 are balanced. In the floating state, the magnetic head (not shown) formed on each of the head sliders 132 performs a data reading/reproducing function with respect to the disk 107.

When the operation of the HDD 100 stops, the head sliders 132 move away from the disk 107 and are parked on a ramp 110 provided outside the disk 107. The suspension 131 includes an end-tap 134 at an end portion thereof. As the end-tap 134 contacts and slides along the ramp 110, the HSA 120 and the head sliders 132 are parked.

The VCM block 115 can be fixedly installed on the base member 101. The voice coil 155 of the overmold 150 is inserted into the VCM block 115. The VCM block 115 comprises a magnet (not shown) arranged above and below the voice coil 155 and a yoke (not shown) supporting the magnet. The voice coil 155, the magnet, and the yoke constitute the voice coil motor that provides a drive force to pivot the HSA 120. The pivoting of the HSA 120 is controlled by a servo control system.

The bending alleviation through hole 129 of each of the first and second arm plates 126A and 126B is formed such that a portion of the through hole 129 overlaps and closely contacts an edge 152 of the overmold 150 (see FIG. 1). The bending alleviation through hole 129 is formed in the shape of a slot extending along the edge 152 of the overmold 150. The length of the slot is maximized such that rigidity of the HGAs 130A and 130B is maintained. In the present embodiment, the bending alleviation through hole 129 has a single slot shape. However, the present invention is not limited thereto and other shapes, such as a plurality of circular bending alleviation through holes can be separately arranged along the edge 152 of the overmold 150.

When the nut 135 is coupled to the lower end portion 123 of the pivot bearing 121, the bending alleviation through hole 129 alleviates the pressing force applied to the first and second arm plates 126A and 126B by the edge 152. Thus, an upward bending of the first arm plate 126A and a downward bending of the second arm plate 126B (respectively speaking with respect to the positioning illustrated in FIG. 4) are alleviated so that the flatness of the first and second arms 125A and 125B is improved. In other words, the first and second arms 125A and 125B remain parallel with each other when the nut 135 is fastened to the lower end portion 123 of the pivot bearing 121.

According to the present general inventive concept, the pressing force applied to the arm plate by the edge of the overmold 150 is alleviated by the bending alleviation through hole 129 of the arm plate formed in a portion that overlaps and closely contacts the edge of the overmold. Thus, when the unamount type HSA according to the present invention is assembled, bending of arm plates is alleviated so that bit error rate (BER) and head-disk interference (HDI) characteristics of an HDD including the HSA can be improved.

While this present general inventive concept has been particularly shown and described with reference to exemplary embodiments thereof, it will be understood by those skilled in the art that various changes in form and details may be made therein without departing from the scope of the general inventive concept as defined by the appended claims.

## Claims

1. An arm plate (126A,B) coupled to a pivot bearing (121) to closely contact an overmold (150), the arm plate (126A,B) comprising:
a leading end portion to which a head gimbal assembly (130A,B), HGA, is attached when assembling a head stack assembly (120), HSA, of a hard disk drive (100), HDD; and
a bending alleviation through hole (129) formed in a portion of the plate (126A,B) that overlaps and closely contacts an edge (152) of the overmold (150).

2. The arm plate of claim 1, wherein the bending alleviation through hole (129) is a slot extending along a length of the edge (152) of the overmold (150).

3. A head stack assembly (120), HSA, pivotally installed on a base member (101) of a hard disk drive (100), the HSA including a head slider (132), to write data to a disk (107) or to read data from the disk, the head stack assembly (120) comprising:
a pivot bearing (121) fixed to the base member (101);
an overmold (150) through which the pivot bearing (121) is inserted;
at least one arm plate (126A,B) according to claim 1 through which the pivot bearing (121) is inserted and closely contacts the overmold (150);
the head gimbal assembly (130A,B), HGA, comprising a suspension (131) attached to the leading end portion of the arm plate (126A,B) and the head slider (132) mounted on a leading end portion of the suspension; and
a nut (135) coupled to a lower end portion (123) of the pivot bearing (121) to prevent the arm plate (126A,B) and the overmold (150) from being separated from the pivot bearing (121).

4. The head stack assembly of claim 3, wherein the bending alleviation through hole (129) is a slot extending along the edge (152) of the overmold (150).

5. The head stack assembly of claim 3, wherein the at least one arm plate (126A,B) is provided in a pair and one of the arm plates closely contacts an upper end portion of the overmold (150) and the other arm plate closely contacts a lower end portion of the overmold.

6. A hard disk drive (100) comprising a base member (101), a disk (107) that is a data storage medium installed on the base member, and a head stack assembly (120) according to one of the previous claims 3 to 5.

7. A hard disk drive (100), HDD, comprising:
at least two arms (125A,B) each including a head slider (132) to read and write data from and to a disk (107) and a bending alleviation unit (129) disposed at a portion thereof;
an overmold (150) disposed between each of the at least two arms (125A,B) each overmold having an edge portion (152) to extend along a length of each bending alleviation unit; and
a pivot bearing assembly (121) disposed through each of the at least two arms (125A,B) and the overmold (150) to maintain each overmold between the respective at least two arms such that when the pivot bearing assembly assembles the overmold with the respective at least two arms, the bending alleviation unit (129) prevents the edge (152) of the overmold from bending the respective arm such that the at least two arms remain in parallel with each other.

8. The HDD of claim 7, wherein the bending alleviation unit (129) is a slot formed through a portion of the respective arm (125A,B).

9. The HDD of claim 7, wherein the bending alleviation unit (129) is formed of a plurality of circular bending alleviation through holes.

10. The HDD of claim 7, wherein each of the at least two arms (125A,B) comprises:
an arm plate (126A,B) having the pivot bearing assembly (121) disposed through a first end thereof and the bending alleviation unit (129); and
a head gimbal assembly (130A,B), HGA, including a suspension (131) attached at a first end to a second end of each arm plate and a head slider (132) mounted on a second end portion of the suspension.
